# EUROPEAN PATENT APPLICATION

(11) **EP 4 787 938 A1**
(43) Date of publication of application: **05.08.2026**
(21) Application number: 26152611.5
(22) Date of filing: 19.01.2026
(51) Int. Cl.: H04W 24/08, H04B 17/309, H04W 24/10

(54) **MEASUREMENT CONFIGURATION IN COMMUNICATIONS**

(30) Priority: 31.01.2025 FI 20255075
(71) Applicant: Nokia Solutions and Networks Oy, 02610 Espoo (FI)
(72) Inventor: HATHIRAMANI, Navin, Coppell (US); DU, Jinfeng, West Windsor (US)
(74) Representative: Nokia EPO representatives

(57) **Abstract**

An apparatus may transmit (301), to a network device, capability information on radio frequency bandwidth capability of the apparatus, occupied bandwidth capability of the apparatus, and instantaneous bandwidth capability of the apparatus. The apparatus may receive (302), from the network device, a measurement configuration requesting the apparatus to perform measurements on incumbent signal characteristics. The apparatus may switch (303) to the measurement configuration and perform measurements on the incumbent signal characteristics in accordance with the measurement configuration.

## Description

### FIELD

The following example embodiments relate to wireless communication.

### BACKGROUND

Spectrum sharing may be considered as an approach to enable new bands for wireless communications.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided a method comprising:
transmitting, from an apparatus to a network device, capability information on radio frequency bandwidth capability of the apparatus, occupied bandwidth capability of the apparatus, and instantaneous bandwidth capability of the apparatus;
receiving, by the apparatus from the network device, a measurement configuration requesting the apparatus to perform measurements on incumbent signal characteristics; and
switching, by the apparatus, to the measurement configuration and perform measurements on the incumbent signal characteristics in accordance with the measurement configuration.

According to a second aspect, there is provided a method comprising...
receiving, by a device from a user apparatus, capability information on: radio frequency bandwidth capability of the user apparatus, occupied bandwidth capability of the user apparatus, and instantaneous bandwidth capability of the user apparatus;
based on the capability information, and based on a current carrier signal configured for the user apparatus, determining, by the device for the user apparatus, a measurement configuration; and
transmitting, from the device to the user apparatus, the measurement configuration thereby requesting the user apparatus to perform measurements on incumbent signal characteristics.

According to a third aspect, there is provided an apparatus comprising means for causing the apparatus to perform the method of any of the first to second aspects.

According to a fourth aspect, there is provided an apparatus comprising at least one processor, and at least one memory storing instructions that, when executed by the at least one processor, cause the apparatus to perform at least the method of any of the first to second aspects.

According to a fifth aspect, there is provided a computer program comprising instructions which, when executed by an apparatus, cause the apparatus to perform at least the method of any of the first to second aspects.

According to a sixth aspect, there is provided a computer readable medium comprising program instructions which, when executed by an apparatus, cause the apparatus to perform at least the method of any of the first to second aspects.

According to a seventh aspect, there is provided a non-transitory computer readable medium comprising program instructions which, when executed by an apparatus, cause the apparatus to perform at least the method of any of the first to second aspects.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2 illustrates exemplary signalling;
FIG. 3 is a flow chart illustrating an exemplary method;
FIG. 4 is a flow chart illustrating an exemplary method;
FIGs. 5A-5D illustrate incumbent sensing according to an exemplary embodiment;
FIGs. 6 and 7 illustrate exemplary apparatuses.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), sixth generation (6G), or seventh generation (7G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

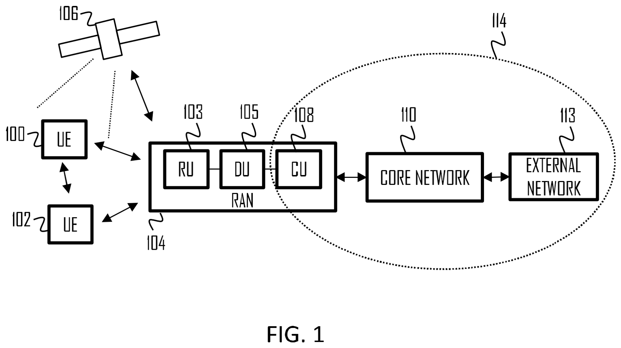

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, a RAN node, or a network device.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and/or receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, or low earth orbit (LEO) satellite systems, such as mega-constellations (i.e., systems in which hundreds of (nano)satellites are deployed). Alternatively, the satellites may be airborne devices, such as an unmanned aerial vehicle (UAV), or a high-altitude platform system (HAPS). A given satellite 106 may provide communication services on Earth via one or more satellite beams. The one or more satellite beams create one or more cells over a given service area that may be bounded by the field of view of the satellite 106.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

It is envisaged that 7G, which will succeed the 5G and 6G technologies, will be able to satisfy the requirements of extremely high bandwidth, almost zero latency, and universal integration.

Some example embodiments are described below using principles and terminology of 5G radio access technology without limiting the example embodiments to 5G radio access technology, however.

Spectrum is a scarce resource employed by many systems and services. For mobile networks, spectrum bands may be deployed using an existing deployment grid, providing large bandwidths and a possibility to leverage massive MIMO solutions. Due to the scarcity of clean spectrum, spectrum sharing may be considered as one approach for enabling new bands for wireless communications. In the spectrum sharing paradigm, the sharing may not only need to be enabled with incumbents of the band, for example, fixed service (FS), but also between services, e.g. a wireless local area network (WLAN), such as wireless fidelity Wi-Fi, and 3GPP. These types of approaches may be able to unlock the upper 6 GHz band (6425 to 7125 MHz) e.g. in Europe. For example, shared use of the band may be possible by both 3GPP cellular service and unlicensed access. In the USA (United States of America), 7 to 8 GHz band sharing frameworks between 3GPP networks and fixed services, and other incumbents may also be required. Spectrum sharing between different services and/or users of a band was enabled in the USA on a citizens broadband radio service (CBRS) band via the usage of a spectrum access system (SAS). The CBRS framework also requires the use of an environmental sensing capability (ESC), which may involve sensors deployed e.g. along the coastal lines of the USA to detect navy radar activity. An issue with the ESC may be that if they are to detect very low levels of signals from the navy radar ships, the interference towards these ESCs may need to be minimized; hence the maximum allowed equivalent isotropic radiated power (EIRP) of the CBRS base stations in the surrounding areas may be impacted. CBRS may attempt to move away from the ESC based solutions, but sensing solutions may be required for certain spectrum sharing scenarios.

Network operators may utilize an exclusively licensed spectrum, however, if shared spectrum is the only option for the operators to invest in these resources, the spectrum is to be reliable and have large geographical and time-based availability. To maximize the spectral availability for mobile network operators (MNO), a sharing framework based on sensing incumbent detection at the base station may be applied. This may allow mitigation actions to be performed per cell and only in cells which may impact the incumbent activity for the time period of the incumbent activity. The mitigation actions here may vary from physical resource block (PRB) blanking and transmit power reductions to interference to incumbent reduction via beam forming/nulling techniques.

Other alternatives for sensing at a cell/base station may include:
- Notification based triggering of mitigation actions may require the incumbents (or higher services) of the band to send a notification of their planned activities in a certain region. This may then trigger mitigation actions in the impacted base stations. This may be used as a sharing scenario for certain incumbents.
- Base stations may be limited to low transmission power and only indoor penetration. This may require no coordination between incumbents and 3GPP base stations, but it may not allow to achieve ubiquitous coverage for the band or help address the outdoor capacity needs of operators. 3GPP indoor deployments may also be costly. This type of solution may be used by e.g. a WLAN or Wi-Fi based community. Additionally, this type of solution does not aid in maximizing spectral usage.

It may be possible to semi-statically define channel bandwidths and configure the filters and the RU processing based on those, wherein for incumbent measurements, a separate receiver with its own processing chain may need to be integrated within the radio unit as per service-oriented architecture (SoA).

Distributed sensing at a cell level by 3GPP networks may be used for detecting incumbent operation to then trigger appropriate mitigation actions, however, incumbents (or services with higher priority) of the band may have a channelization different from that of 3GPP. 3GPP deployments may need to protect these incumbents based on their in-band and out-of-band emissions. Radio units (RU) may have an occupied bandwidth (oBW) and an instantaneous bandwidth (iBW) capability defined by their filtering and processing capabilities. iBW indicates the range a radio unit (RU) may be able to support, as defined by the radio frequency (RF) frontends and antennas. The occupied bandwidth indicates the maximum bandwidth it may be able to handle; typically limited by digital frontend (DFE) and/or baseband (BB) processing SoCs.

The RU filters and processing capabilities may be statically configured based on the 3GPP carriers the RU is meant to transmit and receive on, however, if sensing of incumbents is to be performed, the filter configurations employed for 3GPP and incumbent sensing may have different requirements. At the same time configuring filter configurations larger than the 3GPP BW, may impact the performance of emissions in the DL, and the UL may experience an increased noise rise. The increase of emissions in the DL may be harmful for e.g. any service operating in the adjacent band. The typical solutions may require the RU to integrate an additional receiver with the corresponding filters and processing capability, however, this may increase the cost of the RU, thus making the shared band less attractive for operators.

An embodiment may enable measurements of incumbents via the 3GPP radio system, such that the performance impacts may be minimized for in and out of band operations, while yet allowing reliable detection of the incumbent activity.

In an embodiment cell-based sensing may enable real time modifications of the radio unit (RU) configured filters for periods where incumbent sensing or measurements may be required.

The RU may establish connectivity with a distributed unit (DU) and provide its RF BW/oBW/iBW capabilities: switching times for iBW/oBW, capability to process out of band upper end and lower end measurements simultaneously, etc. The DU may receive a request to perform measurements or sensing of incumbents or other services of the shared band. The request may include at least a frequency range of the measurements to be performed. The request may also include characteristics of the signal to be measured or sensed.

The DU may determine a measurement configuration for the RU, based on its capabilities and current configured carriers. Based on the requested frequency range to measure, the DU may need to determine how to reconfigure the RU filters to perform e.g. out of band or out of channel measurements. The DU may determine whether the DL to UL switching time for the RU may need to be extended based on the new configuration, e.g. if DL filtering and UL filtering are different. If additional time is required, the DU may change the duration of the guard period, and in some cases, the DU may inform the UEs accordingly via e.g. group common signaling. In some cases, the gNB may schedule a shorter PDSCH (physical downlink shared channel) in a special slot to allow for larger switching time. The delay for filter reconfiguration may be a one-time delay or a recurring on every DL-UL switch, depending on the RU capabilities.

The DU may determine how the measurements are to be performed, e.g. if several sensing bandwidths are combined for processing to detect incumbent presence or if each is processed individually. The DU may determine whether and how much guard band may be needed between the adjacent sensing bandwidth and the UL communication bandwidth. Extra guard band may be configured by blanking PRBs for UL transmission to suppress interference caused by adjacent channel leakage from communication channels. In such cases, the DU may inform the UEs updated PRB allocations for UL transmission. The DU may determine whether the measurements may be performed in real time (RT), or whether they may be performed in near-RT, i.e. during DL slots when the UL receiver chains are available for processing. The DU may determine the period during which the measurements are to be taken. Thus the RU may be able to use the right configuration, and the DU may ensure that UL allocations do not interfere with the measurements. The DU may inform the RU to perform measurements with the determined configuration which may include a reconfiguration of filters and modified processing of the measurements, e.g. processing measurements of incumbents during DL slots.

The DU may also inform the RU on the signal characteristics, e.g. waveform, bandwidth, frequency range, frequency hopping capability/pattern, of the measurements to be performed. The DU may also inform the RU on a periodicity pattern or a trigger via which to perform these measurements, e.g. the RU may trigger the measurements every 10 seconds or upon the indication of measurements request via a field in a fronthaul frame, e.g. control or O&M (operations and maintenance). The DU may also inform the RU on a criterion which indicates when the RU may revert back to the non-incumbent measurement configuration. This criterion may be based on the number of measurements, number of measurements with no incumbent presence detected, timer based, etc.

The RU may use the new configuration, e.g. oBW/iBW, to perform measurements. The RU may adjust its configuration based on instructions received from the DU. Such reconfiguration may involve reconfiguration of electrically controlled tunable bandwidth pass filters, digital filters, or a combination of both. If the RU is indicated to process sensing measurements in near RT, the RU may store the information from the sensing BW. The RU may process the sensing measurements differently from that of the UL OFDM (uplink orthogonal frequency-division multiplexing), if the request includes e.g. a different waveform type processing.

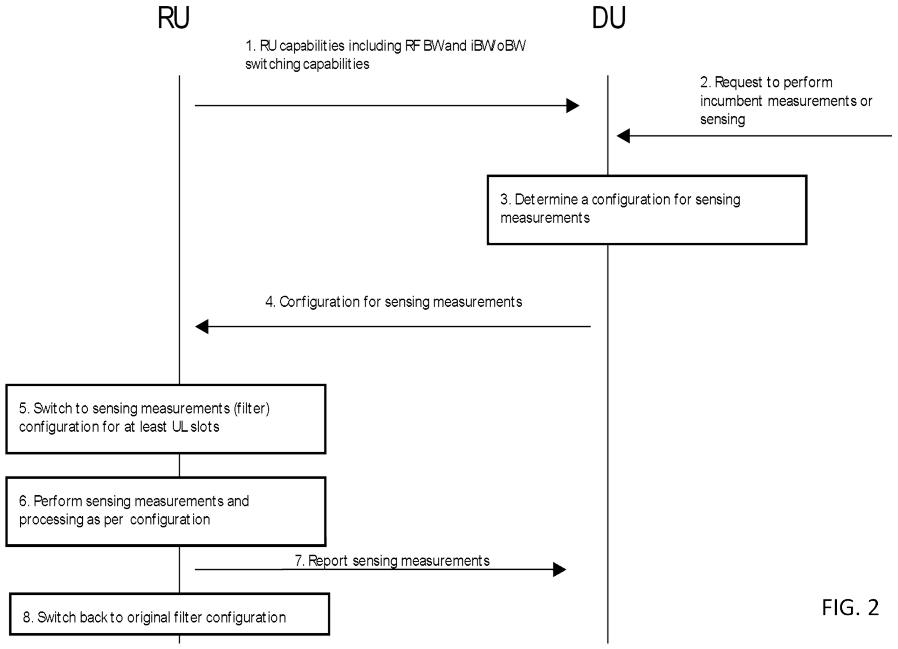

FIG. 2 illustrates a signal flow diagram according to an example embodiment.

Referring to FIG. 2, in item 1, the RU may transmit/provide the DU on its RF bandwidth (RF BW), iBW, oBW, processing capabilities and filter switching capabilities. The switching capabilities may relate to a capability of the RU to have a different configuration for UL and DL filters and the required time to switch between DL to UL when the filters defined for UL and DL are different. The processing capabilities may provide the RUs a capability to process e.g. other waveforms in real time or near real time. In item 2, the DU may receive a request from an external entity to perform measurements of an incumbent. The request may include a frequency range and information on the signal characteristics of the incumbent operation, e.g. waveform, bandwidth or location and spatial direction of the incumbent operation. If there is more than one incumbent, the following steps may be performed per incumbent unless the incumbents possess similar e.g. waveform characteristics. In item 3, the DU may determine a configuration for the RU to enable the measurements of the incumbent activity. This determination may be based on the configured carriers for the RU, the RU iBW, oBW, RF BW and remaining processing capability at the RU. For example, if the RU has additional processing capability the sensing bandwidths may be configured to use this extra processing capability. In some embodiments, for initial measurements where the main concern is whether there is incumbent presence or not, the processing of multiple sensing bandwidths may be performed by a common processor in the RU. This may allow to minimize the additional processing capacity required by the RU for this task. In item 3, additional PRBs may need to be blanked to increase guard band between adjacent sensing and communication bandwidth. The DU may need to inform the UE(s) the updated PRB allocation.

Alternatively, in some embodiments, item 3 of FIG. 2 may be performed at another network element, such as an open-RAN (O-RAN) near-RT RIC (near real-time RAN intelligent controller). In that case, the DU may simply translate the configuration for sensing measurements for the RU to the fronthaul interface.

In some embodiments, the determination at item 3 of FIG. 2 may be split between an external entity to the DU and the DU. For example, the external entity to the DU may provide the RU iBW, oBW and RF BW configuration and measurement requirements, and the DU may set the PRB blanking based on its current load. If the DU load is low, it may allow for a larger number of PRBs to be blanked to increase the reliability of the spectrum sensing.

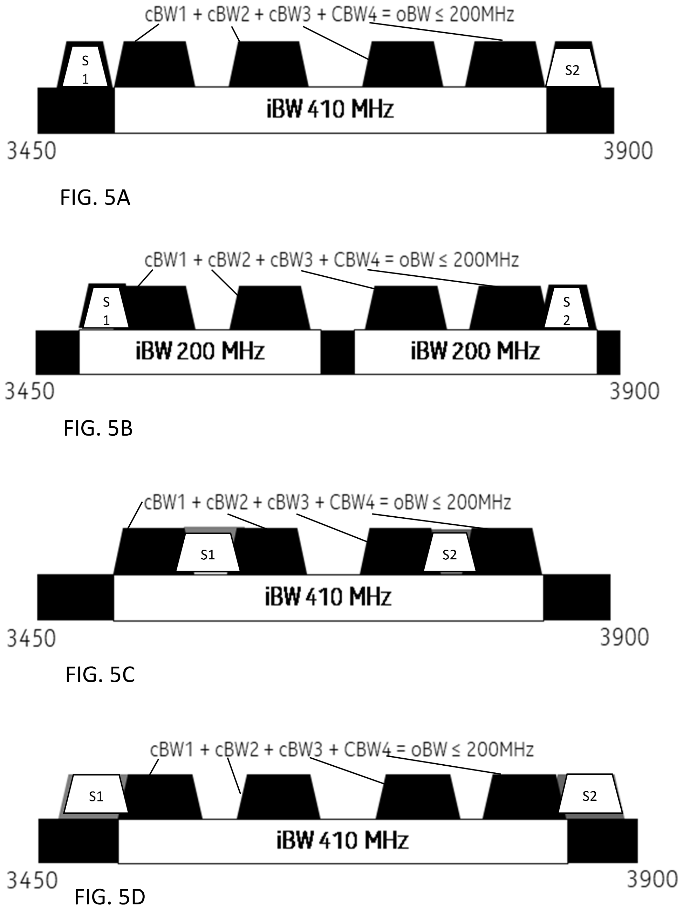

FIG. 5A illustrates incumbent sensing via an iBW extension. FIG. 5B illustrates incumbent sensing via a dual iBW. FIG. 5C illustrates out of channel incumbent sensing overlapping with a 3GPP channel. FIG. 5D illustrates out of band incumbent sensing overlapping with the 3GPP channel. For example, for incumbent measurements required in frequency ranges S1 and S2, the S1 and S2 may be outside the iBW of the RU, as illustrated in FIG. 5A. The DU in this case may determine whether iBW may be extended for S1 and S2 measurements, or if the RU iBW needs to be reconfigured in two smaller iBWs (dual mode), as illustrated in FIG. 5B, which may then allow the RU to perform the measurements of S1 and S2. In both cases S1 and S2 may be processed simultaneously within a single RX chain, e.g., for power threshold detection. Furthermore, if there were no extra UL processing capability available in the RU, the UL raw UL data of S1 and S2 may be stored and processed during DL slots in near real time. Storage of this data may require large memory capacity at the RU, but the RUs may typically be provisioned with storage capacity to store snapshots of raw data for troubleshooting, hence this same storage capacity may be borrowed for measurement periods. Alternatively, in case of lack of processing capabilities in the RU, the DU may determine to configure e.g. cBW1 and cBW4 to include the sensing BWs (S1 and S2) and then include digital sub band filtering for cBW1 and cBW4. In some cases, as illustrated in FIGs 5C, 5D, the bandwidth in which incumbent sensing/measurements are required may overlap with the 3GPP bandwidth allocated for UL transmissions. In these cases, the DU may employ PRB blanking in cBW1 and cBW4 to ensure the interference from 3GPP UE to measurements in S1 and S2 is under certain threshold as required by sensing task. Such interference may be due to adjacent channel leakage. The DU may ensure there is spatial orthogonality in UL allocations for 3GPP UEs in cBW1 and cBW4 and the incumbents being measured. In this case spatial information of the incumbent in reference to cell orientation may be required and may be provided to the DU in item 2 of FIG. 2. The DU may employ smart UL scheduling by prioritizing low power transmissions UEs and/or UEs with capability to receive non-contiguous PUSCH during measurement/sensing periods. High priority cell edge UEs with high UL transmission power requirements may be allocated as far away as possible from S1 and S2 to minimize interference. The DU may also determines whether DL to UL switching time for the RU may need to be extended based on the new configuration, e.g. if DL filter and UL filtering are different. If additional time is required, the DU may change the duration of the guard period, and in some cases, the DU may inform the UEs via e.g. group common signaling. In some cases, the gNB may just schedule shorter PDSCH in the special slot to allow for larger switching time. The delay for filter reconfiguration may be a one-time delay or a recurring on ever DL-UL switch depending on RU capabilities.

In item 4 of FIG. 2, the DU may inform the RU to perform measurements with the determined configuration which may include a reconfiguration of filters and modified processing of the measurements, e.g. processing measurements of incumbents during DL slots. The DU may also inform the RU on the signal characteristics, e.g. waveform, bandwidth, frequency range, frequency hopping capability/pattern, of the measurements to be performed. The DU may also inform the RU on a criterion for when to switch to higher accuracy measurements. For example, if the RU is configured with combined processing of several frequency ranges, where there may be incumbent presence, the DU may provide a power threshold-based criterion, such that when the threshold is exceeded, the measurements of the different frequency ranges may be processed individually, leveraging near RT measurement procedures. The DU may also inform the RU on a periodicity pattern or a trigger via which to perform these measurements, e.g. the RU may trigger the measurements every 10 seconds or upon the indication of measurements request via some field in a fronthaul frame (e.g. control or O&M). If periodic measurements are requested, the DU may determine the periodicity of the measurements based on the processing capability of the RU, i.e. if several frequency ranges have to be individually measured/processed, in some cases the measurement/sensing may not be on consecutive frames to allow for larger processing time. The DU may also inform the RU on a criterion which indicates when the RU may revert back to the non-incumbent measurement configuration. This criterion may be based on number of measurements, number of measurements with no incumbent presence detected, timer based, etc.

In item 5 of FIG. 2, the RU may switch to the configuration provided by the DU for incumbent measurements for at least UL slots, and in item 6, the RU may perform the measurements and processing. In item 7, the RU may report the performed measurements to the DU. In item 8, the RU may revert back to its original non-incumbent measurement/sensing-based configuration, upon receiving corresponding instructions from the DU or upon fulfilling an established criteria previously provided by the DU.

An embodiment may enable cell-based sensing accounting for the RU capabilities. An additional receiver or additional processing capacity may be employed for the RU for incumbent sensing. Cell-based mitigation actions may be allowed to be performed in shared bands maximizing spectral usage in these bands. Impacts to 3GPP performance may be minimized when modifying only UL filters and/or when modifying filter and processing configuration dynamically.

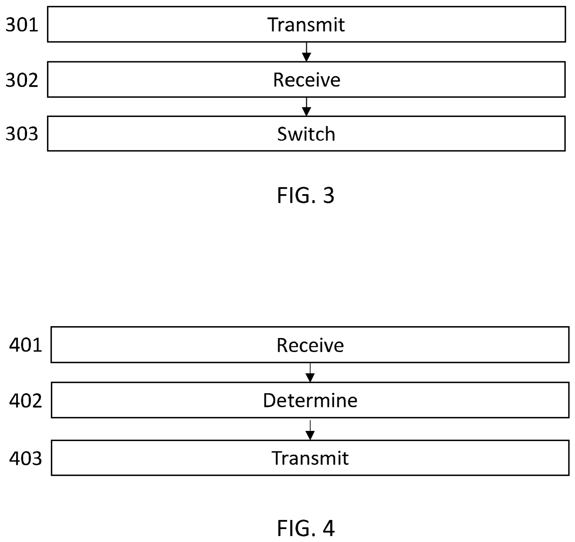

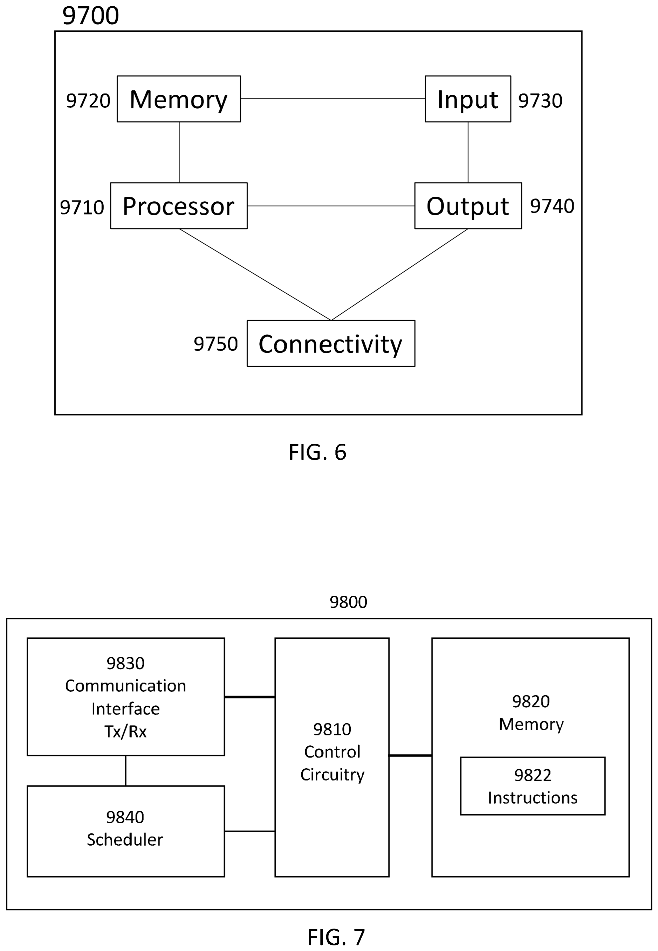

FIG. 3 illustrates a flow chart according to an example embodiment of a method for measurement configuration. The method may be performed by an apparatus 9700 depicted in FIG. 6. For example, the apparatus 9700 may be, or comprise, or be comprised in, a user equipment (UE) 100, 102 or radio unit (RU).

In block 301, the apparatus 9700 may transmit, to a network device, capability information on radio frequency bandwidth capability of the apparatus, occupied bandwidth capability of the apparatus, and instantaneous bandwidth capability of the apparatus 9700. In block 302, the apparatus 9700 may receive, from the network device, a measurement configuration requesting the apparatus 9700 to perform measurements on incumbent signal characteristics. At 303, the apparatus 9700 may switch to the measurement configuration and perform measurements on the incumbent signal characteristics in accordance with the measurement configuration.

Similarly to the procedure described in FIG. 2 for the configuration of the sensing and measurements of the RU, the UE may also be configured for spectrum sensing measurements, taking into account its RF capabilities. In that case the RU in FIG. 2 may be replaced with the UE, and items/steps 1, 4 and 7 may be over-the-air (OTA) procedures between the UE and its serving cell(s).

FIG. 4 illustrates a flow chart according to an example embodiment of a method for measurement configuration. The method may be performed by a device 9800 depicted in FIG. 7. For example, the device 9800 may be, or comprise, or be comprised in, a network node 104 or distributed unit (DU) of a radio access network.

In block 401, the device 9800 may receive, from a user apparatus, capability information on: radio frequency bandwidth capability of the user apparatus, occupied bandwidth capability of the user apparatus, and instantaneous bandwidth capability of the user apparatus. In block 402, the device 9800 may, based on the capability information, and based on a current carrier signal configured for the user apparatus, determine, for the user apparatus, a measurement configuration. In block 403, the device 9800 may transmit, to the user apparatus, the measurement configuration thereby requesting the user apparatus to perform measurements on incumbent signal characteristics.

The blocks, related functions, and information exchanges (messages) described above by means of FIGS. 2 to 4 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, the terms "the at least one" and "the one or more" mean "any one of the at least one" and "any one of the one or more", respectively.

FIG. 6 illustrates an example of an apparatus 9700 comprising means for causing the apparatus 9700 to perform one or more of the example embodiments (e.g., the method of FIG. 3) described above. For example, the apparatus 9700 may be an apparatus such as, or comprising, or comprised in, a user equipment (UE) 100, 102. The user equipment may also be called a wireless communication device, a subscriber unit, a mobile station, a remote terminal, an access terminal, a user terminal, a terminal device, or a user device.

The apparatus 9700 may comprise a circuitry or a chipset applicable for realizing one or more of the example embodiments described above. For example, the apparatus 9700 may comprise at least one processor 9710. The at least one processor 9710 interprets instructions (e.g., computer program instructions) and processes data. The at least one processor 9710 may comprise one or more programmable processors. The at least one processor 9710 may comprise programmable hardware with embedded firmware and may, alternatively or additionally, comprise one or more application-specific integrated circuits (ASICs).

The at least one processor 9710 is coupled to at least one memory 9720. The at least one processor is configured to read and write data to and from the at least one memory 9720. The at least one memory 9720 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 9720 stores computer readable instructions that are executed by the at least one processor 9710 to perform one or more of the example embodiments described above. For example, non-volatile memory stores the computer readable instructions, and the at least one processor 9710 executes the instructions using volatile memory for temporary storage of data and/or instructions. The computer readable instructions may refer to computer program code.

The computer readable instructions may have been pre-stored to the at least one memory 9720 or, alternatively or additionally, they may be received, by the apparatus, via an electromagnetic carrier signal and/or may be copied from a physical entity such as a computer program product. Execution of the computer readable instructions by the at least one processor 9710 causes the apparatus 9700 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 9700 may further comprise, or be connected to, an input unit 9730. The input unit 9730 may comprise one or more interfaces for receiving input. The one or more interfaces may comprise, for example, at least one of: one or more temperature, motion and/or orientation sensors, one or more cameras, one or more accelerometers, one or more microphones, one or more buttons and/or one or more touch detection units. Further, the input unit 9730 may comprise an interface to which external devices may connect to.

The apparatus 9700 may also comprise an output unit 9740. The output unit may comprise or be connected to one or more displays capable of rendering visual content, such as a light emitting diode (LED) display, a liquid crystal display (LCD) and/or a liquid crystal on silicon (LCoS) display. The output unit 9740 may further comprise one or more audio outputs. The one or more audio outputs may be for example loudspeakers.

The apparatus 9700 further comprises a connectivity unit 9750. The connectivity unit 9750 enables wireless connectivity to one or more external devices. The connectivity unit 9750 comprises at least one transmitter and at least one receiver that may be integrated to the apparatus 9700 or that the apparatus 9700 may be connected to. The at least one transmitter comprises at least one transmission antenna, and the at least one receiver comprises at least one receiving antenna. The connectivity unit 9750 may comprise an integrated circuit or a set of integrated circuits that provide the wireless communication capability for the apparatus 9700. Alternatively, the wireless connectivity may be a hardwired application-specific integrated circuit (ASIC). The connectivity unit 9750 may also provide means for performing at least some of the blocks or functions of one or more example embodiments described above. The connectivity unit 9750 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 9700 may further comprise various components not illustrated in FIG. 6. The various components may be hardware components and/or software components.

FIG. 7 illustrates an example of an apparatus 9800 comprising means for causing the apparatus 9800 to perform one or more of the example embodiments (e.g., the method of FIG. 4) described above. For example, the apparatus 9800 may be an apparatus such as, or comprising, or comprised in, a network node 104 of a radio access network.

The apparatus 9800 may comprise, for example, a circuitry or a chipset applicable for realizing one or more of the example embodiments described above. The apparatus 9800 may be an electronic device comprising one or more electronic circuitries. The apparatus 9800 may comprise a communication control circuitry 9810 such as at least one processor, and at least one memory 9820 storing instructions 9822 which, when executed by the at least one processor, cause the apparatus 9800 to carry out one or more of the example embodiments described above. Such instructions 9822 may, for example, include computer program code (software). The at least one processor and the at least one memory storing the instructions may provide the means for providing or causing the performance of any of the methods and/or blocks described above.

The processor is coupled to the memory 9820. The processor is configured to read and write data to and from the memory 9820. The memory 9820 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 9820 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 9820 or, alternatively or additionally, they may be received, by the apparatus, via an electromagnetic carrier signal and/or may be copied from a physical entity such as a computer program product. Execution of the computer readable instructions causes the apparatus 9800 to perform one or more of the functionalities described above.

The memory 9820 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 9800 may further comprise or be connected to a communication interface 9830, such as a radio unit, comprising hardware and/or software for realizing communication connectivity with one or more wireless communication devices according to one or more communication protocols. The communication interface 9830 comprises at least one transmitter (Tx) and at least one receiver (Rx) that may be integrated to the apparatus 9800 or that the apparatus 9800 may be connected to. The communication interface 9830 may provide means for performing some of the blocks and/or functions (e.g., transmitting and receiving) for one or more example embodiments described above. The communication interface 9830 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 9830 provides the apparatus with radio communication capabilities to communicate in the wireless communication network. The communication interface may, for example, provide a radio interface to one or more UEs 100, 102. The apparatus 9800 may further comprise or be connected to another interface towards a core network 110, such as the network coordinator apparatus or AMF, and/or to other access nodes of the wireless communication network.

The apparatus 9800 may further comprise a scheduler 9840 that is configured to allocate radio resources. The scheduler 9840 may be configured along with the communication control circuitry 9810 or it may be separately configured.

It is to be noted that the apparatus 9800 may further comprise various components not illustrated in FIG. 7. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be understandable to a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising at least one processor, and at least one memory storing instructions that, when executed by the at least one processor, cause the apparatus at least to:
transmit, to a network device, capability information on radio frequency bandwidth capability of the apparatus, occupied bandwidth capability of the apparatus, and instantaneous bandwidth capability of the apparatus;
receive, from the network device, a measurement configuration requesting the apparatus to perform measurements on incumbent signal characteristics; and
switch to the measurement configuration and perform measurements on the incumbent signal characteristics in accordance with the measurement configuration;
wherein a duration of a guard bandwidth is determined between adjacent measurements bandwidth and uplink communication bandwidth, wherein additional physical resource blocks are blanked to increase the guard bandwidth to suppress interference caused by adjacent channel leakage.

2. The apparatus according to claim 1, further being caused to:
report, to the network device, results of the measurements on the incumbent signal characteristics; and
switch off the measurement configuration.

3. The apparatus according to claim 1 or 2, being caused to:
receive, from the network device,
signal characteristics of the measurements to be performed, including waveform, bandwidth, frequency range, and/or frequency hopping pattern;
a periodicity pattern and/or a trigger for performing the measurements; and/or
a criterion indicating when the apparatus is to switch off the measurement configuration.

4. The apparatus according to any of the preceding claims, wherein the capability information comprises information on
switching times for instantaneous bandwidth and occupied bandwidth; and/or
a capability to perform bandwidth upper end and bandwidth lower end measurements simultaneously.

5. The apparatus according to any of the preceding claims, wherein
the measurement configuration involves reconfiguration of electrically controllable tunable bandwidth pass filters, and/or digital filters.

6. A device comprising at least one processor, and at least one memory storing instructions that, when executed by the at least one processor, cause the device at least to:
receive, from a user apparatus, capability information on: radio frequency bandwidth capability of the user apparatus, occupied bandwidth capability of the user apparatus, and instantaneous bandwidth capability of the user apparatus;
based on the capability information, and based on a current carrier signal configured for the user apparatus, determine, for the user apparatus, a measurement configuration; and
transmit, to the user apparatus, the measurement configuration thereby requesting the user apparatus to perform measurements on incumbent signal characteristics;
wherein the device is caused to
determine, for the user apparatus, how much guard bandwidth is needed between adjacent measurements bandwidth and uplink communication bandwidth,
wherein additional physical resource blocks are blanked to increase the guard bandwidth to suppress interference caused by adjacent channel leakage.

7. The device according to claim 6, being caused to:
transmit, to the user apparatus,
signal characteristics of the measurements to be performed, including waveform, bandwidth, frequency range, and/or frequency hopping pattern;
a periodicity pattern and/or a trigger for performing the sensing measurements; and/or
a criterion indicating when the user apparatus is to switch off the measurement configuration.

8. The device according to claim 6 or 7, wherein the capability information comprises information on
switching times for instantaneous bandwidth and occupied bandwidth; and/or
a capability to perform bandwidth upper end and bandwidth lower end measurements simultaneously.

9. The device according to any of the claims 6 to 8, being caused to:
determine, for the user apparatus, the measurement configuration, upon receiving from a network node a request to perform measurements on a shared bandwidth.

10. The device according to any of the claims 6 to 9, being caused to:
determine, for the user apparatus, a duration of a guard period between uplink transmission and downlink transmission;
determine, for the user apparatus, how much guard bandwidth is needed between adjacent measurements bandwidth and uplink communication bandwidth; and/or
determine, for the user apparatus, whether the measurements on the incumbent signal characteristics are to be performed in real time or in near real time.

11. The device according to any of the claims 6 to 10, wherein
the measurement configuration involves reconfiguration of electrically controllable tunable bandwidth pass filters, and/or digital filters.

12. A method comprising:
transmitting, by an apparatus to a network device, capability information on radio frequency bandwidth capability of the apparatus, occupied bandwidth capability of the apparatus, and instantaneous bandwidth capability of the apparatus;
receiving, by the apparatus from the network device, a measurement configuration requesting the apparatus to perform measurements on incumbent signal characteristics; and
switching, by the apparatus, to the measurement configuration, and performing, by the apparatus, measurements on the incumbent signal characteristics in accordance with the measurement configuration;
wherein a duration of a guard bandwidth is determined between adjacent measurements bandwidth and uplink communication bandwidth, wherein additional physical resource blocks are blanked to increase the guard bandwidth to suppress interference caused by adjacent channel leakage.

13. A method comprising:
receiving, by a device from a user apparatus, capability information on: radio frequency bandwidth capability of the user apparatus, occupied bandwidth capability of the user apparatus, and instantaneous bandwidth capability of the user apparatus;
based on the capability information, and based on a current carrier signal configured for the user apparatus, determining, by the device for the user apparatus, an measurement configuration; and
transmitting, by the device to the user apparatus, the measurement configuration thereby requesting the user apparatus to perform measurements on incumbent signal characteristics;
the method comprising
determining, by the device for the user apparatus, how much guard bandwidth is needed between adjacent measurements bandwidth and uplink communication bandwidth,
wherein additional physical resource blocks are blanked to increase the guard bandwidth to suppress interference caused by adjacent channel leakage.

14. A non-transitory computer readable medium comprising program instructions which, when executed by an apparatus, cause the apparatus to perform at least the following:
transmit, to a network device, capability information on radio frequency bandwidth capability of the apparatus, occupied bandwidth capability of the apparatus, and instantaneous bandwidth capability of the apparatus;
receive, from the network device, a measurement configuration requesting the apparatus to perform measurements on incumbent signal characteristics; and
switch to the measurement configuration and perform measurements on the incumbent signal characteristics in accordance with the measurement configuration;
wherein a duration of a guard bandwidth is determined between adjacent measurements bandwidth and uplink communication bandwidth, wherein additional physical resource blocks are blanked to increase the guard bandwidth to suppress interference caused by adjacent channel leakage.

15. A non-transitory computer readable medium comprising program instructions which, when executed by a device, cause the device to perform at least the following:
receive, from a user apparatus, capability information on: radio frequency bandwidth capability of the user apparatus, occupied bandwidth capability of the user apparatus, and instantaneous bandwidth capability of the user apparatus;
based on the capability information, and based on a current carrier signal configured for the user apparatus, determine, for the user apparatus, a measurement configuration; and
transmit, to the user apparatus, the measurement configuration thereby requesting the user apparatus to perform measurements on incumbent signal characteristics;
wherein the device is caused to
determine, for the user apparatus, how much guard bandwidth is needed between adjacent measurements bandwidth and uplink communication bandwidth,
wherein additional physical resource blocks are blanked to increase the guard bandwidth to suppress interference caused by adjacent channel leakage.
